# EUROPÄISCHE PATENTSCHRIFT

(11) **EP 2 260 190 B1**
(45) Veröffentlichungstag und Bekanntmachung des Hinweises auf die Patenterteilung: **12.04.2017**
(21) Anmeldenummer: 09725600.2
(22) Anmeldetag: 27.02.2009
(51) Int. Cl.: F01N 3/28, B23K 1/00, B23K 1/008, B23K 1/20, B23K 3/06

(54) **WABENKÖRPER UND VERFAHREN ZUR HERSTELLUNG EINES GELÖTETEN WABENKÖRPERS**
HONEYCOMB BODY AND PROCESS FOR PRODUCING A SOLDERED HONEYCOMB BODY
CORPS EN NID-D'ABEILLES ET PROCÉDÉ DE FABRICATION PAR BRASAGE D'UN CORPS EN NID-D'ABEILLES

(30) Priorität: 28.03.2008 DE 102008016148
(43) Veröffentlichungstag der Anmeldung: 15.12.2010
(73) Patentinhaber: Continental Automotive GmbH, 30165 Hannover (DE)
(72) Erfinder: MAUS, Wolfgang, 51429 Bergisch Gladbach (DE); BRÜCK, Rolf, 51429 Bergisch Gladbach (DE); HIRTH, Peter, 51503 Rösrath (DE)
(86) Internationale Anmeldenummer: PCT/EP2009/052330
(87) Internationale Veröffentlichungsnummer: WO 2009/118230

(56) Entgegenhaltungen:
- WO-A-98/53187
- WO-A-2007/031331
- DE-A1- 10 218 856
- DE-A1-102004 058 285
- US-A- 5 891 248

## Beschreibung

Die vorliegende Erfindung betrifft einen Wabenkörper aufweisend zumindest ein Gehäuse und Metallfolien, die eine Kanalstruktur bilden. Ein solcher Wabenkörper wird insbesondere als Abgasreinigungseinheit in Abgassystemen mobiler Verbrennungskraftmaschinen eingesetzt.

Wabenkörper dieser Art bestehen zumeist aus einem einteiligen und/oder mehrteiligen Gehäuse, das mit einer relativ großen Materialdicke bereitgestellt wird, so dass es die äußere Form bzw. Gestalt und/oder sogar einen Teil der Abgasleitung selbst darstellen kann. Im Gegensatz dazu ist man bestrebt, die Metallfolien zum Aufbau der Kanalstruktur relativ dünnwandig auszuführen, um auf gleichem Bauraum eine möglichst große Oberfläche zu realisieren. Die Oberfläche wird beispielsweise dazu benutzt, Katalysatoren zu applizieren, die mit dem Abgas, welches die Kanalstruktur durchströmt, in Kontakt kommen. Damit wird eine intensive Kontaktierung der Abgasbestandteile mit dem Katalysator und damit eine effektive Reinigung des Abgases gewährleistet.

Problematisch hierbei ist, dass sich die dünnen Metallfolien gegenüber dem relativ dickwandigen Gehäuse bei thermischer und/oder dynamischer Wechselbeanspruchung, wie sie in einem mobilen Abgassystem üblich ist, unterschiedlich verhalten. Deshalb stellt die Verbindung zwischen dem Gehäuse und den Metallfolien eine besondere technische Herausforderung dar.

Es ist bekannt, in das Gehäuse eines solchen Wabenkörpers vor der Integration der Metallfolien bzw. der Kanalstruktur Streifen aus Lotmaterial, bzw. so genannte Lotfolie, auf der inneren Mantelfläche zu applizieren und dann die Kanalstruktur einzuschieben. Ebenso ist bekannt, eine solche Lötfolie um die Kanalstruktur zu wickeln und diesen Verbund dann in das Gehäuse einzuführen, so dass die gesamte Lötfolie auf der inneren Mantelfläche des Gehäuses anliegt. Das gleiche Verfahren wurde bereits schon vorgeschlagen, wobei der Lötbereich nicht als Band über den gesamten Umfang, sondern mittels relativ großer Flecken bereitgestellt wird. Nur beispielhaft ist ein entsprechender Wabenkörper schematisch in Fig. 3 und auf eine detailliertere Weise in WO98/53187A dargestellt.

Diese Verbindungstechnik bzw. Lotmittel-Applikation führt dazu, dass viel Lotmaterial ungenutzt auf der inneren Mantelfläche des Gehäuses vorgesehen ist, und damit nicht nur ein erhöhter Materialbedarf und damit höhere Herstellkosten sondern auch Lotmittelkonzentrationen auf der Oberfläche des Gehäuses bzw. der Metallfolien auftreten, die unerwünschte Diffusionsvorgänge mit Legierungselementen des Gehäuses und/oder der Metallfolie zur Folge haben können. Außerdem ist zu berücksichtigen, dass hiermit nur eine begrenzte Anpassung der Lötbereiche mit Bezug auf das thermische und/oder dynamische Ausdehnungsverhalten von Gehäuse und/oder Metallfolien erreicht wird.

Aufgabe der vorliegenden Erfindung ist es, die mit Bezug auf den Stand der Technik geschilderten Probleme zumindest teilweise zu lösen. Insbesondere soll ein Wabenkörper angegeben werden, der eine verbesserte Dauerhaltbarkeit im Hinblick auf die thermischen und/oder dynamischen Wechselbeanspruchungen eines solchen Wabenkörpers im Abgassystem mobiler Verbrennungskraftmaschinen zeigt. Gleichermaßen soll ein Herstellungsverfahren angegeben werden, welches einen sparsameren Verbrauch von Lotmaterial zur Folge hat.

Diese Aufgaben werden gelöst mit einem Wabenkörper gemäß den Merkmalen des Patentanspruchs 1 sowie einem Verfahren zur Herstellung eines Wabenkörpers gemäß dem Patentanspruch 7. Weitere bevorzugte Ausgestaltungen des Wabenkörpers bzw. des Herstellungsverfahrens sowie eine bevorzugte Verwendung eines solchen Wabenkörpers sind in den abhängig formulierten Patentansprüchen angegeben. Es ist darauf hinzuweisen, dass die in den Patentansprüchen angegebenen Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erörtert die Erfindung weiter und gibt zusätzliche Ausführungsvarianten an.

Der erfindungsgemäße Wabenkörper weist zumindest ein Gehäuse und Metallfolien auf, die eine Kanalstruktur bilden, wobei die Kanalstruktur mit einer Vielzahl linienförmiger Lötverbindungen an dem Gehäuse befestigt ist.

Das Gehäuse ist dabei bevorzugt einteilig und kann eine zylindrische oder eine davon abweichende Querschnittsform aufweisen. Die Metallfolien umfassen bevorzugt zumindest teilweise strukturierte Metallfolien, die letztendlich so gewickelt, geschichtet und/oder gewunden sind, dass diese eine Kanalstruktur, beispielsweise nach Art einer Wabenstruktur, mit einer Vielzahl von im Wesentlichen parallel zueinander verlaufenden Kanälen bildet. Während das Gehäuse regelmäßig eine Materialstärke größer als 1 mm aufweist, sind die Metallfolien mit einer Materialstärke beispielsweise im Bereich von weniger als 0,12 mm ausgeführt, beispielsweise sogar kleiner 0,08 mm.

Hier wird nun vorgeschlagen, statt auf die bekannten großen Lötbereiche zurück zu greifen, eine Vielzahl linienförmiger Lötverbindungen vorzusehen. Eine Vielzahl meint dabei insbesondere zumindest 10 Lötverbindungen, beispielsweise sogar mehr als 30 oder sogar wenigstens 100 Lötverbindungen. Die linienförmige Ausgestaltung der Lötverbindungen ist dabei so orientiert, dass diese quer zur Richtung eines Umfangs des Gehäuses ausgerichtet ist. Erfindungsgemäss laufen die linienförmigen Verbindungen parallel zur Erstreckungsrichtung der Metallfolien in dem Gehäuse. "Linienförmig" ist eine Lötverbindung insbesondere dann, wenn sie deutlich länger als breit ist, wobei die Breite in Richtung des Umfangs des Gehäuses zu bestimmen ist. Ganz besonders bevorzugt ist "linienförmig" schmaler, als beispielsweise die größte Weite eines Kanals der Kanalstruktur. Damit ist klar, dass mit der Vielzahl dieser kleinen linienförmigen Lötverbindungen eine gezieltere Anbindung der Metallfolie bzw. der Kanalstruktur an das Gehäuse ermöglicht wird, beispielsweise mit Bezug auf die Lage von hochbeanspruchten Bereichen der Kanalstruktur, in der ggf. mehr linienförmige Lötverbindungen vorgesehen sein können, als in anderen Teilbereichen, oder wenn es ein höheres Maß an Flexibilität bedarf, dann ist an diesen Stellen eine geringere Anzahl von linienförmigen Lötverbindungen vorzusehen. Jedenfalls erlaubt diese linienförmige Gestalt der vielen Lötverbindungen eine flexible Ausgestaltung des Lötmusters zwischen Gehäuse und Kanalstruktur.

In diesem Zusammenhang wird bevorzugt, dass jede linienförmige Lötverbindung in Richtung eines Umfangs des Gehäuses mit einer Breite von maximal 5 mm ausgeführt ist. Bevorzugt ist, dass die Breite einen Wert von 3 mm oder sogar 1 mm nicht überschreitet. Eine solch sparsame Applikation von Lotmittel führt zu einer kostengünstigen Herstellung und verhindert unerwünschte Lötverbindungen in benachbarten Bereichen.

Des Weiteren wird als vorteilhaft angesehen, dass eine Vielzahl von Metallfolien so angeordnet ist, dass diese mit zumindest einem Ende an dem Gehäuse anliegen und jeweils zumindest eine linienförmige Lötverbindung bilden. Mit anderen Worten heißt das beispielsweise, dass die Metallfolien mit ihren beiden Enden an der inneren Mantelfläche des Gehäuses zur Anlage gebracht werden, beispielsweise indem die Metallfolie entsprechend gewickelt, gewunden und/oder geschichtet werden. Die Enden liegen dann an dieser inneren Mantelfläche des Gehäuses an bzw. schmiegen sich dort tangential an. Durch die Gestalt und/oder die Anordnung der Metallfolien kann somit der Kontaktbereich hin zum Gehäuse und/oder die Vorspannung, mit der die Enden gegen das Gehäuse drücken, eingestellt werden. Es wird vorgeschlagen, genau diese Kontaktbereiche bzw. den sich anschmiegenden Bereich der Enden der Metallfolien für eine solche linienförmige Lotverbindung zu nutzen. Folglich wird die linienförmige Lotverbindung beispielsweise durch genau das Ende der Metallfolie begrenzt und erstreckt sich ausgehend von dort in innere Bereiche der jeweiligen Metallfolie. Erfindungsgemäss wird vorgeschlagen, dass das Gehäuse nun in Kontaktbereichen mit den Metallfolien Lotmaterial aufweist. Das bedeutet mit anderen Worten insbesondere, dass kein restliches Lotmaterial, wie es beispielsweise durch die Vorsehung von herkömmlichen Lotstreifen über den Umfang des Gehäuses passierte, dazwischen existiert. Folglich wird auch in diesem Bereich nur genau der Kontaktbereich mit Lotmaterial versehen, so dass der Einsatz des Lotmaterials weiter reduziert werden kann.

Gemäß einer anderen Ausgestaltung der Erfindung wird vorgeschlagen, dass in Richtung eines Umfangs eines Gehäuses kein ununterbrochen umlaufender Lötbereich vorgesehen ist. Auch dies soll im Wesentlichen charakterisieren, dass kein umlaufender Lötbereich auf den inneren Umfang des Gehäuses nach Fertigstellung des gelöteten Wabenkörpers zu finden ist. Für den hier beschriebenen Fall gilt dies für den gesamten Wabenkörper, also die gesamte, von der Kanalstruktur überdeckte innere Mantelfläche des Gehäuses.

Des Weiteren wird als vorteilhaft angesehen, dass in Richtung eines Umfangs des Gehäuses ein umlaufender Lötbereich mit einer Vielzahl voneinander beabstandeter und senkrecht zur Richtung eines Umfang angeordneter linienförmiger Lötverbindungen vorgesehen ist. Ein solcher Lötbereich weist beispielsweise in Richtung des Umfangs mindestens 20 linienförmige Lötverbindungen auf, die also insbesondere in Richtung des Umfangs zueinander ausgerichtet sind, insbesondere parallel zueinander verlaufen. Gegebenenfalls können mehrere solcher umlaufender Lötbereiche vorgesehen sein, insbesondere einer nahe an einer Stirnseite der Kanalstruktur. Regelmäßig wird aber in einem solchen umlaufenden Lötbereich der Flächenanteil, der von den linienförmigen Lötverbindungen auf der inneren Mantelfläche in diesem umlaufenden Lötbereich ausmacht, höchstens 50 % betragen, insbesondere höchstens 20 % und bevorzugt sogar höchstens 10 %.

Einer Weiterbildung der Erfindung zur Folge wird ein solcher Wabenkörper vorgeschlagen, bei dem höchstens 10 % der Fläche einer von der Kanalstruktur bedeckten inneren Mantelfläche des Gehäuses mit linienförmigen Lötverbindungen ausgeführt ist. Ganz bevorzugt ist der Anteil sogar höchstens 5% oder sogar höchstens 2 %. Die innere Mantelfläche des Gehäuses ist mit anderen Worten die Fläche, die von der Kanalstruktur bedeckt wird, wobei diese axial durch die Stirnseiten der Kanalstruktur regelmäßig begrenzt ist und den zwischenliegenden Umfangsbereich meint. Folglich führt mit der hier vorgeschlagenen linienförmigen Gestalt der Lötverbindung nur ein sehr kleiner Flächenanteil tatsächlich zur Ausbildung einer fügetechnischen Verbindung zwischen Kanalstruktur bzw. Metallfolien und dem Gehäuse.

Gemäß einem weiteren Aspekt der Erfindung wird auch ein Verfahren zur Herstellung eines Wabenkörper vorgeschlagen, wobei der Wabenkörper zumindest ein Gehäuse und Metallfolien mit Enden, die eine Kanalstruktur bilden, aufweist. Das Verfahren umfasst dabei zumindest folgende Schritte:
(a) Bereitstellung einer Mehrzahl Metallfolien,
(b) Positionieren einer Vielzahl Haftmittelstreifen im Grenzbereich der Enden auf zumindest einem Teil der Metallfolien,
(c) Einbringung der Metallfolien in das Gehäuse, so dass eine Kanalstruktur gebildet und zumindest ein Teil der Haftmittelstreifen mit dem Gehäuse in Kontakt ist,
(d) Beloten des Wabenkörpers, so dass sich Lotmaterial an den Haftmittelstreifen am Gehäuse anordnet,
(e) Erhitzen des Wabenkörpers zur Ausbildung einer Vielzahl zur Erstreckungsrichtung der Metallfolien in dem Gehäuse parallel verlaufenden linienförmiger Lötverbindungen zwischen den Metallfolien und dem Gehäuse.

Das Verfahren dient insbesondere zur Herstellung eines hier erfindungsgemäß beschriebenen Wabenkörpers.
Schritt (a) betrifft insbesondere die Bereitstellung von zumindest teilweise strukturierten Metallfolien und ganz besonders bevorzugt die Bereitstellung von einer Mehrzahl glatter Metallfolien und einer Mehrzahl gewellter Metallfolien.
Schritt (b) betrifft das Applizieren von Haftmittel auf konkret vorgegebenen Bereichen der Metallfolien. Vor allem für die Verbindung zwischen Metallfolien und Gehäuse werden diese Haftmittelstreifen im Grenzbereich der Enden bzw. der späteren Kontaktbereiche hin zum Gehäuse positioniert. Zur Applikation des Haftmittels wird eine Drucktechnik angewendet, also insbesondere mit Hilfe einer Druckeinrichtung (zum Beispiel nach Art des ink-jet-Verfahrens). Mit einer solchen Druckeinrichtung können besonders genau und in abgestimmter Größe die Haftmittelstreifen, die beispielsweise im Wesentlichen auch der letztendlichen Linienform der Lötverbindung entsprechen erzeugt werden.
Im Schritt (c) werden die Metallfolien nun in das Gehäuse (zumindest teilweise) eingebracht. Hierfür können die Metallfolien zuvor geschichtet, gestapelt und/oder gewunden und/oder gewickelt werden. Das Einbringen in das Gehäuse kann so erfolgen, dass die Metallfolien in ein (z.B. einteiliges) Gehäuse (ggf. teilweise) eingedrückt werden, es ist aber auch möglich die Metallfolien in ein (geteiltes bzw. offenes) Gehäuse einzulegen und das Gehäuse danach zu schließen. Jedenfalls werden dabei Kanalstrukturen gebildet, deren Kanäle im Wesentlichen parallel zur Erstreckungsrichtung des Gehäuses verlaufen. Die Einbringung der Metallfolien erfolgt dabei gelichzeitig so, dass zumindest ein Teil der Haftmittelstreifen, nämlich die, die nicht zur Verbindung der Metallfolien untereinander dienen, an dem Gehäuse zur Anlagen kommen bzw. direkt dort angrenzen.
Schritt (d) betrifft insbesondere den Verfahrensschritt, bei dem Lotmaterial von einer Stirnseite des Wabenkörpers her durch die Kanalstruktur mit den Haftmittelstreifen in Kontakt gebracht wird. Das Lotmaterial, insbesondere pulverförmiges Lotmaterial, haftet nun an den Haftmittelstreifen und wird dort praktisch für den kommenden Schritt in der gewünschten Menge fixiert.
Schritt (e) stellt nun den thermischen Fügevorgang dar. Bevorzugt ist dabei, dass der Wabenkörper hochtemperaturgelötet wird, also beispielsweise bei einer Temperatur von oberhalb 800 °C und gegebenenfalls bei einer definierten Atmosphäre (Vakuum bzw. Schutzgas) gelötet wird. Dies führt dazu, dass das Haftmittel (Kleber) im Wesentlichen verdampft und das Lotmaterial verflüssigt wird. Nach dem Erhitzen folgt letztendlich ein Abkühlen des Lotmaterials, so dass eine stoffschlüssige Verbindung von Metallfolien, Lotmaterial und Gehäuse gegeben ist.

Ganz besonders bevorzugt ist, dass das Gehäuse frei von Haftmitter und Lotmittel bereitgestellt wird. Dies gilt insbesondere bis zum Schritt (e) mit Ausnahme des Haftmittels bzw. Lotmittels, was durch Schritt (c) oder (d) von den Metallfolien auf das Gehäuse übertragen wird. Ganz besonders bevorzugt ist in diesem Zusammenhang auch, dass das Gehäuse auf der inneren Mantelfläche beispielsweise mit Passivierungsmitteln versehen ist, die eine unerwünschte Anlagerung von Haftmittel und/oder Lotmittel in anderen Bereichen, als das durch die Metallfolien bestimmt wird, verhindern.

Ganz besonders findet ein solcher, hier erfindungsgemäß hergestellter und/oder erfindungsgemäß ausgestalteter, Wabenkörper Verwendung als Abgasbehandlungskomponente in einem Abgassystem eines Kraftfahrzeuges.

Die Erfindung sowie das technische Umfeld werden anhand der Figuren näher erläutert. Es ist darauf hinzuweisen, dass die Figuren schematischer Natur sind und besonders bevorzugte Ausführungsvarianten der Erfindung aufzeigen, auf die die Erfindung jedoch nicht begrenzt ist. Es zeigen:
- Fig. 1:: den prinzipiellen Aufbau eines Abgassystems,
- Fig. 2:: einen Querschnitt durch einen Wabenkörper,
- Fig. 3:: Lötbereiche zwischen Gehäuse und Metallfolie gemäß dem Stand der Technik,
- Fig. 4:: eine Ausführungsvariante des erfindungsgemäßen Wabenkörpers,
- Fig. 5-Fig. 10: eine bevorzugte Ausführungsvariante des erfindungsgemäßen Verfahrens,
- Fig. 11:: eine mögliche Ausgestaltung einer strukturierten Metallfolie zur Herstellung eines Wabenkörpers, und
- Fig. 12:: ein Detail einer glatten Metallfolie mit einer linienförmigen Lötverbindung.

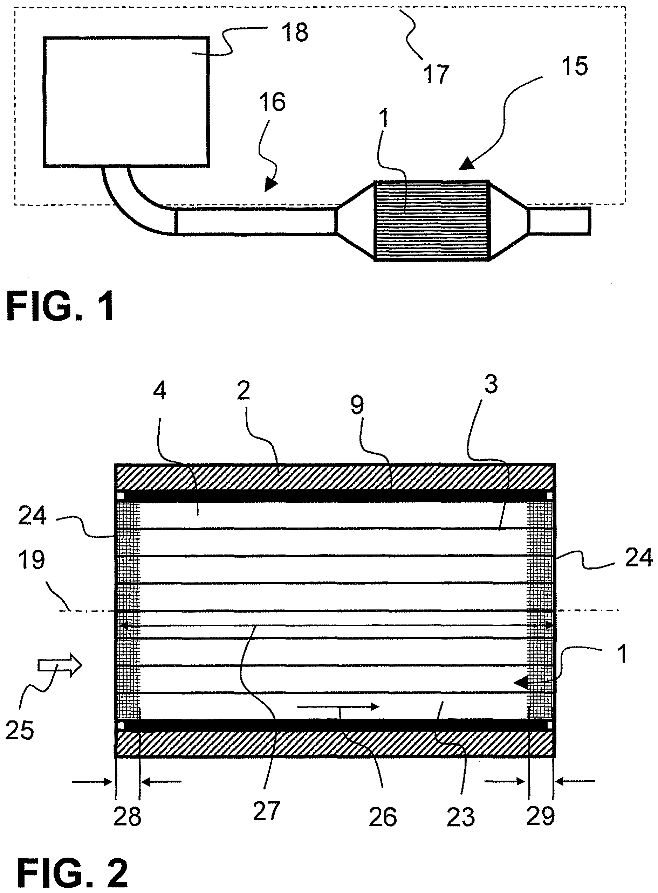

Fig. 1 zeigt schematisch ein Kraftfahrzeug 17, beispielsweise einen Personen- oder Lastkraftwagen. Dieses Kraftfahrzeug 17 weist einen Motor 18, beispielsweise einen Dieselmotor oder einen Ottomotor auf. Das in dem Motor 18 erzeugte Abgas durchströmt ein Abgassystem 16, das regelmäßig mit einer Abgasleitung und einer Mehrzahl von Abgasbehandlungskomponenten 15 ausgeführt ist. Als Abgasbehandlungskomponente kommen insbesondere Katalysatorträgerkörper, Filter, Abscheider, Adsorber, Plasma-Reaktoren, Reformer etc. in Betracht. Schematisch ist hier angezeigt, dass die Abgasbehandlungskomponente 15 einen Wabenkörper 1 aufweist.

Fig. 2 zeigt in einem Längsschnitt eine Ausgestaltung eines Wabenkörpers 1. Außen dargestellt ist hierbei ein einteiliges, zylindrisch ausgestaltetes Gehäuse 2, das relativ dickwandig ist. Im Inneren des Gehäuses 2 bildet das Gehäuse 2 einen Kontaktbereich 9 mit der darin angeordneten Kanalstruktur 4. Diese Kanalstruktur 4 ist mit einer Mehrzahl von glatten und strukturierten Metallfolien 3 gebildet. Dabei sind Kanäle 23 gebildet, deren Kanalerstreckungsrichtung 26 im Wesentlichen parallel zur Achse 19 des Wabenkörpers ist. Es ist möglich, dass ein Teil der Wände der Kanalstruktur 4 auch mit anderen Materialien, beispielsweise Filtermaterialien, ausgeführt ist. Es ist auch möglich, dass die Metallfolien 3 mit Durchbrechungen ausgeführt sind, so dass die in der Strömungsrichtung 25 ankommenden Abgasströmungen an der ersten Stirnseite 24 aufgeteilt und im Inneren der Kanalstruktur 4 miteinander vermischt werden.

Hier wird auch dargestellt, dass die Kanalstruktur 4 bzw. die sie bildenden Metallfolien 3 nicht über die gesamte Erstreckung 27 in Richtung der Achse 19 miteinander verbunden sind. Vielmehr ist nahe den Stirnseiten 24 ein vorderer Abschnitt 28 und ein hinterer Abschnitt 29 gebildet, in dem Lötverbindungen ausgeführt sind.

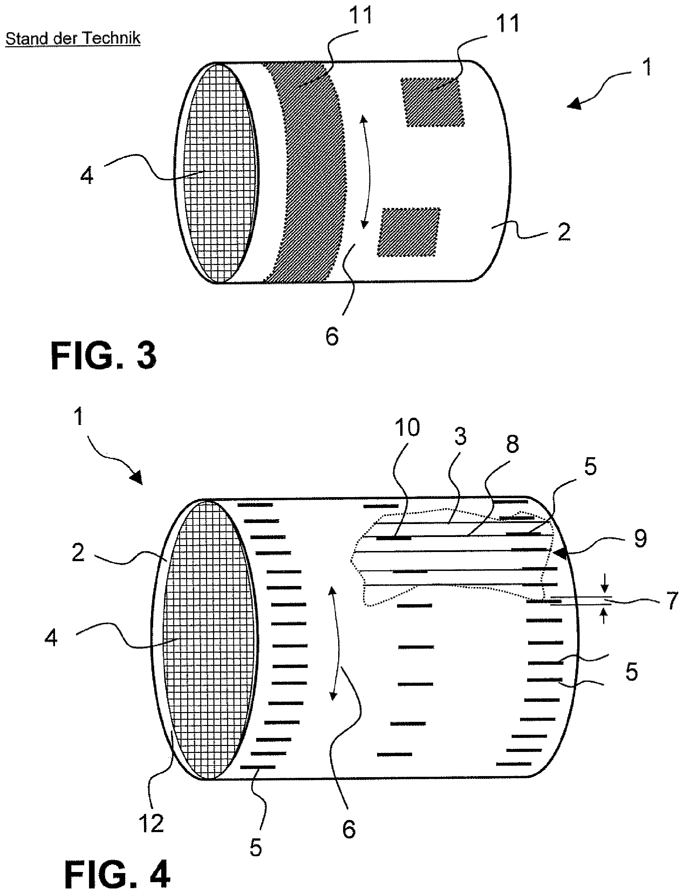

Fig. 3 zeigt nun schematisch, wie eine Verbindung zwischen der Kanalstruktur 4 und dem Gehäuse 2 nach dem Stand der Technik gefertigt wurde. Dazu werden in Richtung eines Umfangs 6 verschiedene, relativ großflächige, Lötbereiche 11 vorgeschlagen. Die Lötbereiche 11 können dabei umlaufend und/oder fleckenartig ausgebildet sein. Sie weisen jedenfalls eine signifikante Ausdehnung in Richtung des Umfangs 6 auf.

Im Gegensatz dazu ist in Fig. 4 eine Ausführungsvariante des erfindungsgemäßen Wabenkörpers 1 dargestellt. Die Wabenstruktur 4 ist hierbei, wie in dem Ausbruch oben rechts zu erkennen, mit einer Vielzahl von glatten und gewellten Metallfolien 3 gebildet. Diese Metallfolien 3 liegen mit ihren Enden 8 an der inneren Mantelfläche 12 des Gehäuses 2 an. Genau in diesem Kontaktbereich 9 sind nun an den gewünschten Positionen linienförmige Lötverbindungen 5 durch eine entsprechende Bereitstellung von Lotmaterial 10 realisiert. Es ist dabei zu erkennen, dass in Richtung des Umfangs 6 kein ununterbrochener Lötbereich gebildet ist, sondern vielmehr eine Ansammlung von konkret zueinander beabstandeten linienförmigen Lötverbindungen 5. Die Breite 7 der linienförmigen Verbindungen 5 beträgt dabei bevorzugt weniger als 2 mm.

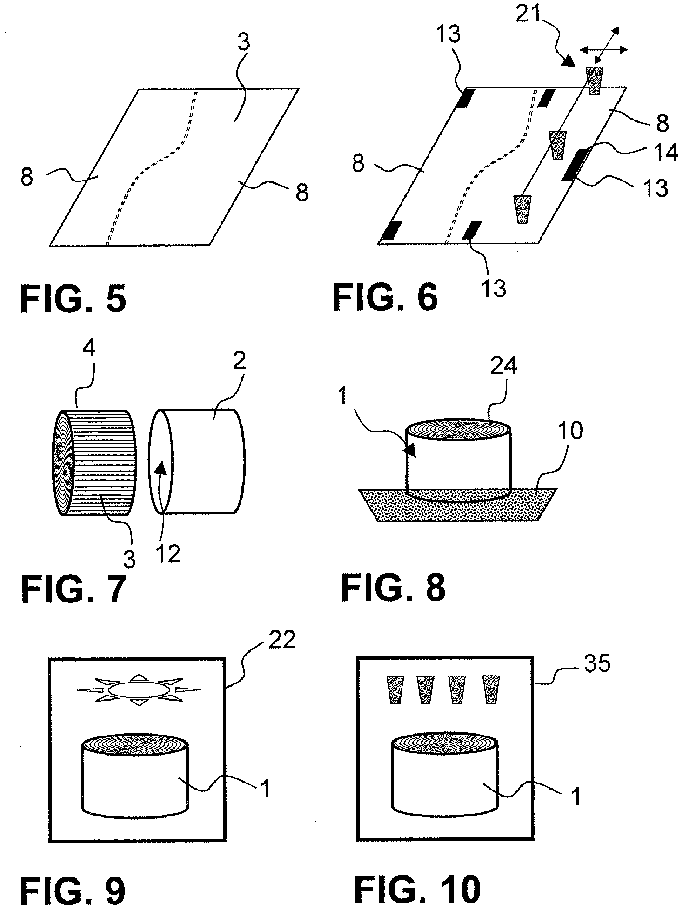

Die Fig. 5 bis 10 veranschaulichen nun ein bevorzugtes Herstellungsverfahren für solche Wabenkörper 1. In Fig. 5 ist eine glatte Metallfolie 3 dargestellt mit gegenüberliegenden Enden 8. Fig. 6 veranschaulicht nun die Applikation von Haftmittel 14 (z.B. Kleber). Dabei wird eine Druckereinrichtung 21 über die Metallfolie 3 bewegt, so dass an konkreten Stellen, beispielsweise auch nahe der Enden 8 Haftmittelstreifen 13 gebildet sind. Jeweils zu berücksichtigen ist, dass die Positionen der Haftmittelstreifen 13 an den Enden 8 nicht symmetrisch gestaltet sein muss, sondern hier können beliebige Muster generiert werden.

Mehrere solcher glatten Metallfolien 3 und zusätzlicher (hier nicht näher gezeigter) gewellter Metallfolien 3 können nun gestapelt und miteinander verwunden werden, so dass eine Kanalstruktur 4 gebildet ist. Diese Kanalstruktur 4 kann nun in ein einteiliges, hier in Fig. 7 zylindrisch dargestelltes, Gehäuse 2 eingeführt werden. Dabei kommen die Enden 8 der Metallfolien 3 an der inneren Mantelfläche 12 des Gehäuses 2 zur Anlage.

Fig. 8 veranschaulicht, dass der so vorbereitete Wabenkörper 1 mit seiner Stirnseite 24 beispielsweise in Lotmaterial 10 eingetaucht wird. Durch bestimmte Rüttelmechanismen und/oder eine Trägersubstanz (Luft) kann das beispielsweise pulverförmige Lot nun in innere Bereiche der Kanalstruktur 4 und insbesondere hin zu den Haftmittelstreifen 13 transportiert werden. So lagert sich das Lotmaterial 10 an den gewünschten Haftmittelstreifen 13 an.

Der so vorbereitete Wabenkörper wird nun beispielsweise hin zu einem Ofen 22 transportiert und dort einer thermischen Behandlung unterzogen. Dabei werden die linienförmigen Lötverbindungen ausgebildet (vgl. Fig. 9).

Gegebenenfalls kann auch noch ein in Fig. 10 angedeuteter Beschichtungsvorgang folgen, bei dem der gelötete Wabenkörper 1 nun einer Beschichtungsvorrichtung 35 zugeführt wird. Der Wabenkörper 1 kann insbesondere mit so genanntem Washcoat und/oder einem Katalysator beschichtet werden.

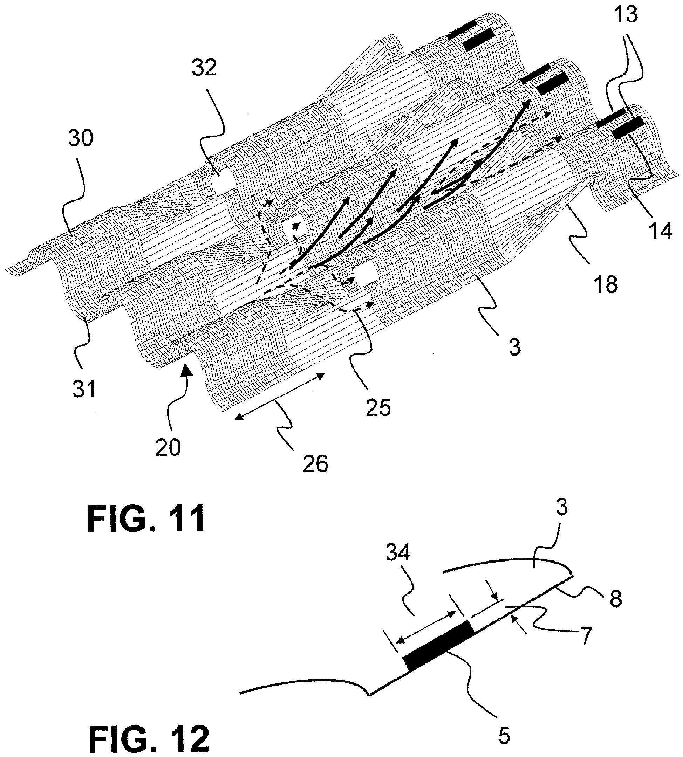

Fig. 11 veranschaulicht eine Ausführungsvariante für eine gewellte Metallfolie 3, die beispielsweise mit glatten Metallfolien, wie sie in Fig. 6 veranschaulicht sind, abwechselnd angeordnet werden können. Die gewellte Metallfolie 3 weist dabei eine Struktur 20 auf, die mit einer periodischen Wiederholung von Erhebungen 30 und Senken 31 die Kanäle in Kanalerstreckungsrichtung 26 ausbildet. Die gewellte Metallfolie weist zusätzlich Einbauten 18 auf, die sich in das Innere der Kanäle hinein erstrecken und somit eine Umlenkung der Teilabgasströme bewirken. Benachbart zu diesen (ausgestanzten) Einbauten 18 sind Öffnungen 32 vorgesehen, durch die Abgas gegebenenfalls auch in benachbarte Kanäle strömen kann, wie es durch die entsprechenden Pfeile der Strömungsrichtung 25 angedeutet ist. Dabei ist sowohl ein Mischen mit Strömungen links und rechts als auch oben und unten möglich.

Fig. 12 zeigt ein vergrößertes Detail einer glatten Metallfolie 3, beispielsweise in einem gebogenen Zustand zur Anlage an der inneren Mantelfläche an ein (nicht dargestelltes) Gehäuse. Veranschaulicht werden soll dabei (schematisch) die linienförmige Lötverbindung 5, die direkt an das Ende 8 der Metallfolie 3 angrenzt. Dabei ist die linienförmige Lötverbindung 5 mit einer Breite 7 von beispielsweise 1 bis 2 mm und einer Länge 34 im Bereich von 5 bis 10 mm ausgeführt.

### Bezugszeichenliste

- 1: Wabenkörper
- 2: Gehäuse
- 3: Metallfolie
- 4: Kanalstruktur
- 5: linienförmige Lötverbindung
- 6: Umfang
- 7: Breite
- 8: Ende
- 9: Kontaktbereich
- 10: Lotmaterial
- 11: Lötbereich
- 12: Mantelfläche
- 13: Haftmittelstreifen
- 14: Haftmittel
- 15: Abgasbehandlungskomponente
- 16: Abgassystem
- 17: Kraftfahrzeug
- 18: Motor
- 19: Achse
- 20: Struktur
- 21: Druckeinrichtung
- 22: Ofen
- 23: Kanal
- 24: Stirnseite
- 25: Strömungsrichtung
- 26: Kanalerstreckungsrichtung
- 27: Erstreckung
- 28: vorderer Abschnitt
- 29: hinterer Abschnitt
- 30: Erhebung
- 31: Senke
- 32: Öffnung
- 33: Einbaute
- 34: Länge
- 35: Beschichtungsvorrichtung

## Patentansprüche

1. Wabenkörper (1) aufweisend zumindest ein Gehäuse (2) und Metallfolien (3), die eine Kanalstruktur (4) bilden und Enden (8) aufweisen, wobei die Enden 8 mit einer Vielzahl linienförmiger Lötverbindungen (5) an dem Gehäuse (2) befestigt ist, **dadurch gekennzeichnet, dass** die linienförmigen Lötverbindungen (5) parallel zur Erstreckungsrichtung der Metallfolien in dem Gehäuse verlaufen und das Gehäuse (2) nur in Kontaktbereichen (9) mit den Metallfolien (3) Lotmaterial (10) aufweist.

2. Wabenkörper (1) nach Patentanspruch 1, bei dem jede linienförmige Lötverbindung (5) in Richtung eines Umfangs (6) des Gehäuses (2) mit einer Breite (7) von maximal 5 Millimeter ausgeführt ist.

3. Wabenkörper (1) nach Patentanspruch 1 oder 2, bei dem eine Vielzahl von Metallfolien (3) so angeordnet ist, dass diese mit zumindest einem Ende (8) an dem Gehäuse (2) anliegen und jeweils zumindest eine linienförmige Lötverbindung (5) bilden.

4. Wabenkörper (1) nach einem der vorhergehenden Patentansprüche, bei dem in Richtung eines Umfangs (6) des Gehäuses (2) kein ununterbrochen umlaufender Lötbereich (11) vorgesehen ist.

5. Wabenkörper (1) nach einem der vorhergehenden Patentansprüche, bei dem in Richtung eines Umfangs (6) des Gehäuses (2) ein umlaufender Lötbereich (11) mit einer Vielzahl voneinander beabstandeter und senkrecht zur Richtung eines Umfangs (6) angeordneter linienförmiger Lötverbindungen (5) vorgesehen ist.

6. Wabenkörper (1) nach einem der vorhergehenden Patentansprüche, bei dem höchstens 10 % der Fläche einer von der Kanalstruktur (4) bedeckten inneren Mantelfläche (12) des Gehäuses (2) mit linienförmigen Lötverbindungen (5) ausgeführt ist.

7. Verfahren zur Herstellung eines Wabenkörpers (1), aufweisend zumindest ein Gehäuse (2) und Metallfolien (3) mit Enden (8), die eine Kanalstruktur (4) bilden, mit zumindest folgenden Schritten:
(a) Bereitstellung einer Mehrzahl Metallfolien (3),
(b) Positionieren einer Vielzahl von Haftmittelstreifen (13) im Grenzbereich der Enden (8) auf zumindest einem Teil der Metallfolien (3),
(c) Einbringen der Metallfolien (3) in das Gehäuse (2), so dass eine Kanalstruktur (4) gebildet und zumindest ein Teil der Haftmittelstreifen (13) mit dem Gehäuse (2) in Kontakt ist,
(d) Beloten des Wabenkörpers (1), so dass sich Lotmaterial (10) an den Haftmittelstreifen (13) am Gehäuse (2) anordnet,
(e) Erhitzen des Wabenkörpers (1) zur Ausbildung einer Vielzahl zur Erstreckungsrichtung der Metallfolien in dem Gehäuse parallel verlaufenden, linienförmiger Lötverbindungen (5) zwischen den Metallfolien (3) und dem Gehäuse (2).

8. Verfahren nach Patentanspruch 7, bei dem das Gehäuse (2) frei von Haftmittel (14) und Lotmittel (10) bereitgestellt wird.

9. Verwendung eines Wabenkörpers (1) gemäß einem der Patentansprüche 1 bis 6 oder eines Wabenkörpers (1) hergestellt nach einem der Patentansprüche 7 und 8 als Abgasbehandlungskomponente (15) in einem Abgassystem (16) eines Kraftfahrzeuges (17).

## Claims

1. Honeycomb body (1) having at least one housing (2) and metal foils (3) which form a duct structure (4) and have ends (8), wherein the ends (8) are attached to the housing (2) by means of a multiplicity of linear soldered connections (5), **characterized in that** the linear soldered connections (5) run parallel to the direction of extent of the metal foils in the housing and the housing (2) has soldering material (10) only in contact regions (9) with the metal foils (3).

2. Honeycomb body (1) according to Patent Claim 1, in which each linear soldered connection (5) is embodied with a width (7) of at maximum 5 millimeters in the direction of a circumference (6) of the housing (2).

3. Honeycomb body (1) according to Patent Claim 1 or 2, in which a multiplicity of metal foils (3) are arranged in such a way that they bear with at least one end (8) against the housing (2) and each form at least one linear soldered connection (5).

4. Honeycomb body (1) according to one of the preceding patent claims, in which no uninterrupted circumferential soldering region (11) is provided in the direction of a circumference (6) of the housing (2).

5. Honeycomb body (1) according to one of the preceding patent claims, in which a circumferential soldering region (11) with a multiplicity of linear soldered connections (5) which are arranged spaced apart from one another and perpendicular with respect to the direction of a circumference (6) is provided in the direction of a circumference (6) of the housing (2).

6. Honeycomb body (1) according to one of the preceding patent claims, in at most 10% of the surface area of an inner lateral surface (12), covered by the duct structure (4), of the housing (2) is embodied with linear soldered connections (5).

7. Process for producing a honeycomb body (1) having at least one housing (2) and metal foils (3) having ends (8) which form a duct structure (4), having at least the following steps:
(a) provision of a plurality of metal foils (3),
(b) positioning of a multiplicity of adhesive strips (13) in the boundary region of the ends (8) on at least some of the metal foils (3),
(c) introduction of the metal foils (3) into the housing (2) so that a duct structure (4) is formed and at least some of the adhesive strips (13) are in contact with the housing (2),
(d) soldering of the honeycomb body (1) so that soldering material (10) is arranged on the adhesive strips (13) on the housing (2),
(e) heating of the honeycomb body (1) in order to form a multiplicity of linear soldered connections (5), running parallel to the direction of extent of the metal foils in the housing, between the metal foils (3) and the housing (2).

8. Process according to Patent Claim 7, in which the housing (2) is made available free of adhesive (14) and solder (10).

9. Use of a honeycomb body (1) according to one of Patent Claims 1 to 6 or of a honeycomb body (1) produced according to one of Patent Claims 7 and 8 as an exhaust gas treatment component (15) in an exhaust system (16) of a motor vehicle (17).

## Revendications

1. Corps (1) en nid d'abeille ayant au moins une carcasse (2) et des feuilles (3) métalliques qui forment une structure (4) de canal et qui ont des extrémités (8), les extrémités (8) étant fixées à la carcasse (2) par une pluralité de brasure (5) linéaires, **caractérisé en ce que** les brasures (5) linéaires s'étendent parallèlement à la direction dans laquelle s'étendent les feuilles métalliques dans la carcasse et la carcasse (2) n'a de la matière (10) de brasures que dans les régions (9) de contact avec les feuilles (3) métalliques.

2. Corps (1) en nid d'abeille suivant la revendication 1, dans lequel chaque brasure (5) linéaire est réalisée dans la direction d'un pourtour (6) de la carcasse (2) en ayant une largeur (7) de 5 mm au maximum.

3. Corps (1) en nid d'abeille suivant la revendication 1 ou 2, dans lequel une pluralité de feuilles (3) métalliques sont disposées de manière à s'appliquer par au moins une extrémité (8) à la carcasse (2) et à former respectivement au moins une brasure (5) linéaire.

4. Corps (1) en nid d'abeille suivant l'une des revendications précédentes, dans lequel il n'est pas prévu de région (11) de brasure faisant le tour sans interruption dans la direction d'un pourtour (6) de la carcasse (2).

5. Corps (1) en nid d'abeille suivant l'une des revendications précédentes, dans lequel, dans la direction d'un pourtour (6) de la carcasse (2) il est prévu une région (11) de brasure faisant le tour et ayant une pluralité de brasure (5) linéaires, à distance les unes des autres et disposées perpendiculairement à la direction d'un pourtour (6).

6. Corps (1) en nid d'abeille suivant l'une des revendications précédentes, dans lequel au plus 10 % de la surface d'une face (12) latérale, intérieure et couverte par la structure (4) de canal, de la carcasse est réalisé en ayant des brasures (5) linéaires.

7. Procédé de fabrication d'un corps (1) en nid d'abeille comportant au moins une carcasse (2) et des feuilles (3) métalliques ayant des extrémités (8) qui forment une structure (4) de canal, comprenant au moins les stades suivantes :
(a) on se procure une multiplicité de feuilles (3) métalliques,
(b) on met une pluralité de bandes (13) de colle dans la région limite des extrémités (8) en position sur au moins une partie des feuilles (3) métalliques,
(c) on introduit des feuilles (3) métalliques dans la carcasse (2) de manière à former une structure (4) de canal et de manière à ce qu'au moins une partie des bandes (3) de colle soit en contact avec la carcasse (2),
(d) on brase le corps (1) en nid d'abeille de manière à ce que de la brasure (10) soit disposée sur la carcasse (2), sur les bandes (3) de colle,
(e) on chauffe le corps (1) en nid d'abeille pour former entre les feuilles (3) métalliques et la carcasse (2) des brasures (5) linéaires s'étendant parallèlement à la direction dans laquelle s'étendent les feuilles métalliques dans la carcasse.

8. Procédé suivant la revendication 7, dans lequel on se procure la carcasse (2), exempte de colle (14) et de brasure (10).

9. Utilisation d'un corps (1) en nid d'abeille suivant l'une des revendications 1 à 6 ou d'un corps (1) en nid d'abeille fabriqué suivant l'une des revendications 7 et 8 comme élément (15) de traitement de gaz d'échappement dans un système (16) de gaz d'échappement d'un véhicule (17) automobile.
